# EUROPÄISCHE PATENTSCHRIFT

(11) **EP 1 829 373 B1**
(45) Veröffentlichungstag und Bekanntmachung des Hinweises auf die Patenterteilung: **09.03.2011**
(21) Anmeldenummer: 05820533.7
(22) Anmeldetag: 16.12.2005
(51) Int. Cl.: H04N 7/18, G01C 11/00

(54) **VORRICHTUNG ZUR UMGEBUNGSLICHT-UNABHÄNGIGEN KONTINUIERLICHEN BEOBACHTUNG VON OBJEKTEN**
DEVICE FOR CONTINUOUSLY OBSERVING OBJECTS INDEPENDENTLY FROM AMBIENT LIGHT
DISPOSITIF POUR OBSERVER EN CONTINU DES OBJETS INDEPENDAMMENT DE LA LUMIERE AMBIANTE

(30) Priorität: 22.12.2004 DE 102004062986
(43) Veröffentlichungstag der Anmeldung: 05.09.2007
(73) Patentinhaber: DB Netz AG, 60468 Frankfurt am Main (DE)
(72) Erfinder: HULIN, Bernhard, 82178 Puchheim (DE)
(74) Vertreter: Zinken-Sommer, Rainer
(86) Internationale Anmeldenummer: PCT/EP2005/013568
(87) Internationale Veröffentlichungsnummer: WO 2006/069645

(56) Entgegenhaltungen:
- EP-A- 1 437 615
- US-A- 6 150 930
- US-A1- 2004 008 410

## Beschreibung

Die Erfindung betrifft eine Vorrichtung zur Umgebungslicht-unabhängigen kontinuierlichen Beobachtung von Objekten, insbesondere Oberleitungsanlagen von Schienenverkehrswegen, mittels mindestens einer Kamera von einem Fahrzeug aus bei hoher Geschwindigkeit.

Im Stand der Technik werden für eine kontinuierliche Inspektion von Objekten, insbesondere Oberleitungsanlagen von Schienenverkehrswegen, Laser auf einem Fahrzeug verwendet, wobei ein Sender einen Laserpuls aussendet und ein Empfänger, der an der gleichen Stelle wie der Empfänger angeordnet ist, die Zeitspanne bis zum Eintreffen des am Objekt reflektierten Signals ermittelt. Hierbei wird entweder ein stationärer Laserstrahl verwendet, der nur in eine bestimmte Richtung abstrahlt oder auch ein Laserscanner, der einen größeren Bereich abtastet.

Weiterer Stand der Technik ist die Verwendung von Lasern zur aktiven Triangulation mittels Lichtschnittverfahren. Hierbei sendet ein Laser kontinuierlich Licht in einen bestimmten Raumbereich aus, das von einem Empfänger, der einen bestimmten bekannten Abstand (im allgemeinen als Basis bezeichnet) von dem Sender aufweist, aufgefangen wird. Aus dem Winkel unter dem das Licht in den Empfänger einfällt und der Basis wird der Abstand des Objektes ermittelt.

Bei beiden Verfahren, die sowohl nachts als auch tags Objekte beobachten, muss das Sonnenlicht überblendet werden. Demzufolge muss das vom Laser ausgesendete Licht, das am Objekt reflektiert wird, eine höhere Intensität aufweisen als die am Objekt reflektierten Sonnenstrahlen. Dies bedeutet, dass das Laserlicht mit besonders hoher Leistung abgestrahlt werden muss, da die Reflektivität von Objekten i.A. nicht variabel ist.

Weiterer Nachteil der Verwendung von Lasern ist jedoch, dass hierbei Sicherheitsvorschriften bezüglich Gesundheitsgefährdung, insbesondere im Hinblick auf Augensicherheit, beachtet werden müssen. Dies macht es insbesondere erforderlich, dass diese Messverfahren erst bei höheren Geschwindigkeiten eines Messzuges durchgeführt werden dürfen.

Alternativ sind Verfahren bekannt, die eine Beleuchtung zu beobachtender Objekte ausschließlich in dunkler Umgebung vorsehen. Tagsüber im Freien wird somit nicht beleuchtet. Bei diesen Verfahren muss ein geeigneter Zeitpunkt für die Einschaltung bzw. Abschaltung der Beleuchtung gefunden werden. Probleme ergeben sich hierbei insbesondere bei Dämmerung oder auch bei Einfahrt in oder Ausfahrt aus einem Tunnel, da hierbei schnelle Übergänge zwischen Hell und Dunkel auftreten und die Beleuchtung schnell ein- oder ausgeschaltet werden müsste.

Probleme aller Verfahren des Standes der Technik ist, dass bei einer kontinuierlichen Überwachung die sich ändernden Lichtverhältnisse, hervorgerufen durch Tageszeit, Wetter, Schatten, Tunnel und Überbauten, wie z.B. Brücken und Signalbrücken, und Objektbeschaffenheit, wie z.B. Korrosion und Schmutz beachtet werden müssen. Dabei variiert einerseits die Lichtleistung die vom Objekt an der Kamera ankommt, zum anderen die Lichtleistung, die vom Hintergrund an der Kamera ankommt. Beide führen dazu, dass sich im Bild die zu inspizierenden Objekte nicht vom Hintergrund unterscheiden und somit nicht inspiziert werden können.

Ändern sich zudem die Lichtverhältnisse zeitlich rasch, sind Bildteile, Bilder oder Bildsequenzen über- oder unterbelichtet und somit nicht auswertbar. Rasche Änderungen der Lichtverhältnisse treten z.B. bei Tunneleinfahrt oder -ausfahrt auf.

Ferner gibt es, wie in dem soeben aufgezeigten Beispiel, Situationen, in denen keine optimale Belichtungszeit gefunden werden kann, so dass im gesamten Bildbereich keine komplette Inspektion aller zu inspizierender Objekte durchgeführt werden kann.

In diesen Fällen bietet das Nachregeln der Belichtungszeit nur bedingt Abhilfe, da Bildteile über- oder unterbelichtet sind und nicht ausgewertet werden können. Selbst wenn für ein Bild einer Bildsequenz mit sich rasch ändernder Beleuchtung eine optimale Belichtungszeit vorhanden ist, benötigt das Regeln der Belichtungszeit mindestens ein über- bzw. unterbelichtetes Bild. Dieses Bild ist nicht auswertbar wegen der Über- bzw. Unterbelichtung.

Aus EP 1 437 615 A1 ist ein Infrarot-Nachtsichtsystem für Kraftfahrzeuge bekannt, bei dem mindestens zwei Bilder durch Belichtung mit unterschiedlichen Wellenlängenbereichen aufgenommen werden, wobei durch die Verknüpfung dieser beiden Bilder in verbesserter Weise auf wichtige Objekte im Infrarot-Bild aufmerksam gemacht wird.

Aus US 6 150 930 ist ein Videosystem bekannt, bestehend aus einer Beleuchtung und einem Siliziumdetektor, das Kraftfahrzeugführern auf einem erweiterten Display die Umgebung des Fahrzeugs darstellt. Die Beleuchtung der Umgebung erfolgt im kurzwelligen Infrarotbereich. Ein einzelner Siliziumdetektor verarbeitet die elektromagnetischen Signale im kurzwelligen Infrarotspektrum und bei ausgewählten Farbsignalen im sichtbaren Spektralbereich. Dem Kraftfahrzeugführer wird das Infrarotbild der Fahrzeugumgebung zusammen mit ausgewählten Bereichen aus dem sichtbaren Spektrum auf einem Display angezeigt.

Aus US 2004/0008410 A1 ist eine Vorrichtung bekannt, bei der in festgelegten Zeitintervallen eine Lichtquelle im nichtsichtbaren Wellenlängenbereich Objekte im Sichtfeld von Kraftfahrzeugen beleuchtet und ein Bildsensor aus einem Siliziumsubstrat mithilfe von Antireflex-Beschichtungen und Spektralfiltern das von den Objekten reflektierte Licht der Beleuchtungswellenlängen detektiert. Dabei werden die Bilder, die während der Beleuchtungszeit detektiert werden mit denen verglichen, die in mindestens einem Zeitintervall mit ausgeschalteter Beleuchtung gemacht werden. Dieser Ansatz mit Belichtungsreihen (Sequenz von Bildern, wobei jedes mit einer unterschiedlichen Belichtungszeit aufgenommen wird), stellt nur eine Lösung für langsame Fahrten dar oder erfordert eine hohe Aufnahme- und Bearbeitungsrate. Desweiteren erfordert dies einen hohen Speicherplatzbedarf und/oder eine schnelle Verarbeitungseinheit.

Aufgabe der Erfindung ist es somit, eine Vorrichtung zur Inspektion von Objekten, insbesondere Oberleitungsanlagen von Schienenverkehrswegen, bereitzustellen, mit der die Inspektion mit geringem Aufwand Umgebungslichtunabhängig und kontinuierlich in verschiedenen Lichtbereichen durchgeführt werden kann.

Diese Aufgabe wird in Verbindung mit dem Oberbegriff des Anspruches 1 erfindungsgemäß durch die in Anspruch 1 angegebenen Merkmale gelöst.

Ansprüche 2 bis 10 beinhalten vorteilhafte Ausführungsbeispiele der erfindungsgemäßen Lösung aus Anspruch 1.

Erfindungsgemäß wird mindestens eine Multispektralkamera verwendet, die mindestens einen Kanal aufweist, der nur in einem Wellenlängenbereich empfindlich ist und mindestens einen weiteren Kanal aufweist, der nur im unsichtbaren Wellenlängenbereich empfindlich ist. Zusätzlich strahlt eine Beleuchtung das zu untersuchende Objekt in den entsprechenden unsichtbaren Wellenlängenbereichen an, in denen der mindestens eine weitere Kanal empfindlich ist. Als Wellenlängenbereiche kommen vorzugsweise Wellenlängenbereiche aus dem Infrarotbereich >700 nm in Frage. Vorteil bei Wellenlängenbereichen aus dem Infrarotbereich (im Folgenden als IR-Bereich bezeichnet) ist die Durchlässigkeit von Glas. Somit ist einerseits die Verwendung von Standardobjektiven zum anderen eine einfache Integration hinter Windschutzscheiben möglich.

Aus beispielsweise den drei aufgenommen Kanälen der Multispektralkamera mit den Spektralbereichen rot, grün und IR wird ein drei-kanaliges Bild erzeugt. In den jeweiligen Bildern sind auch in Szenen mit teilweise dunklem als auch hellem Hintergrund klar die Objekte erkennbar, selbst wenn das zu inspizierende Objekt teilweise vor hellem Hintergrund und teilweise vor dunklem Hintergrund liegt. Dies ist insbesondere ein Falschfarbenbild, wobei das Bild des IR-Kanals ohne Beschränkung der Allgemeinheit auf den blauen Kanal gelegt wird.

Dieser Ansatz ist unterschiedlich zu einer Vorrichtung mit zwei getrennten Kameras, wobei eine Kamera im sichtbaren und die andere Kamera im unsichtbaren Wellenlängenbereich empfindlich ist. Hierbei würde in Szenen, in denen das zu inspizierende Objekt teilweise vor hellem Hintergrund und teilweise vor dunklem Hintergrund liegt, das Objekt nicht als Ganzes wahrgenommen werden und somit gar nicht oder nur fehlerhaft inspiziert werden.

Die Wellenlängenbereiche können sich insbesondere auch überschneiden oder überlagern. Beide IR-Kanäle müssen Untermengen der Wellenlängenbereiche der jeweiligen Beleuchtungskanäle sein. Dabei ist darauf zu achten, dass mindestens ein IR-Kanal in dem Wellenlängenbereich empfindlich ist, der überwiegend von einem Beleuchtungskanal bestrahlt wird.

Besonderer Vorteil der Erfindung ist, dass durch eine Beleuchtung bei einer Beobachtung von Objekten tagsüber keine Überstrahlung der Sonne oder des reflektierten Sonnenlichtes erforderlich ist. Dies ergibt sich daraus, dass eine kontinuierliche Beobachtung sowohl im sichtbaren Bereich als auch im dauerhaft beleuchteten unsichtbaren Bereich stattfindet. Hierdurch können vorteilhaft auch Objekte, die nur teilweise durch Sonnenlicht beschienen werden, da sie sich beispielsweise teilweise im Schatten befinden, beobachtet werden. Desweiteren können auch Objekte bei schnellem Wechsel zwischen Tageslicht und Dunkelheit, z.B. bei Befahrung einer Strecke mit Tunneln, beobachtet werden.

Durch die Beleuchtung im unsichtbaren Wellenlängenbereich sind bei dunklem Hintergrund, wie z.B. Nacht und Tunnel, die zu inspizierenden Objekte deutlich sichtbar, während der oder die sichtbaren Kanalbilder schwarz erscheinen. Bei sehr hellem Hintergrund, wie z.B. ein Himmel an einem sonnigen Tag, ist die Beleuchtung relativ schwach, so dass in diesem Kanal aufgenommene Bilder ähnlich aussehen, wie die der sichtbaren Kanäle, nämlich heller Hintergrund mit dunklem Vordergrund.

Die Beleuchtung muss dabei nicht notwendigerweise kohärent oder monochromatisch sein, d.h. insbesondere ein handelsüblicher IR-Scheinwerfer oder ein IR-LED-Array. Hierdurch entfallen besonders vorteilhaft Schutzmaßnahmen, die bei Einsatz von Lasern erforderlich sind.

Der Fall, dass ein Objekt weder in einem der sichtbaren Kanäle noch in einem der unsichtbaren Kanäle sich deutlich vom Hintergrund abhebt, kann somit nicht auftreten, denn wenn Objekt und Hintergrund im sichtbaren Bereich gleiche Helligkeit besitzen, kommt es zwischen den beiden in den unsichtbaren Kanälen zu einem Helligkeitsunterschied und umgekehrt.

Die erfindungsgemäße Vorrichtung ist auch für Hinderniserkennung geeignet.

Alternativ zu dem passiven sichtbaren Bereich werden ein thermales passives IR (ab ca. 1 µm) und zusätzlich eine Beleuchtung mit nahem IR (bis ca. 1 µm) verwendet. Dabei müssen die Beleuchtung und die Multispektralkamera so aufeinander abgestimmt sein, dass die Beleuchtung nicht den für thermales IR sensitiven Chip stört und der andere Chip nicht zusätzlich zur Beleuchtung thermales IR aufnimmt.

Bei thermalem IR sehen Tag- und Nacht-Szenen bis auf Schattenwurf bzw. thermische Reflexionen identisch aus. Da beides nicht oder äußerst selten vorkommt, wenn die Kameras gegen den Himmel schauen, ist bei der Oberleitungsinspektion kein Unterschied zwischen Tag und Nacht zu erkennen. In einem Thermalbild erscheint der Himmel gegenüber Objekten immer kalt (dunkel).

Die Erfindung wird nachstehend anhand eines Ausführungsbeispieles und einer Figur näher erläutert.

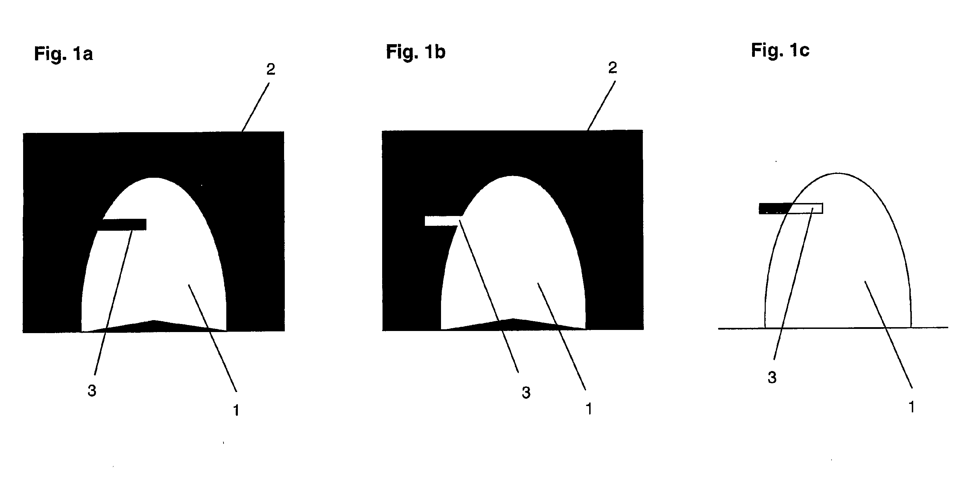

Die Figur 1a zeigt schematisch ein von der Vorrichtung in einem von der Vorrichtung unbeleuchteten Wellenlängenbereich aufgenommenes Bild eines Seitenhalters vor einer Ausfahrt aus einem Tunnel. Die Figur 1b zeigt schematisch ein von der Vorrichtung in einem von der Vorrichtung beleuchteten Wellenlängenbereich aufgenommenes Bild eines Seiten halters vor einer Ausfahrt aus einem Tunnel. Die Figur 1c zeigt schematisch ein Multispektralbild als Kombination der Bilder aus Fig. 1a und Fig. 1 b.

In dem besonders vorteilhaften Ausführungsbeispiel wird vor einer Ausfahrt aus einem Tunnel ein Seitenhalter 3 betrachtet, der sich vom Standpunkt der Vorrichtung aus teilweise vor einem Tunnelportal 1 befindet. In einem unbeleuchteten Wellenlängenbereich ist gemäß Fig. 1a der Seitenhalter 3 im Bild des unbeleuchteten Kanals als unbeleuchtetes Objekt vor dem hellen Hintergrund des Tunnelportals 1 zu erkennen. In einem beleuchteten Wellenlängenbereich ist gemäß Fig. 1b der Seitenhalter 3 im Bild des beleuchteten Kanals als beleuchtetes Objekt vor dem dunklen Hintergrund der Tunnelwandung 2 zu erkennen.

Das Multispektralbild gemäß Fig. 1c stellt eine Kombination des in einem durch die Vorrichtung unbeleuchteten Wellenlängenbereich aufgenommenen Bildes gemäß Fig. 1a und des in einem durch die Vorrichtung beleuchteten Wellenlängenbereich aufgenommenen Bildes gemäß Fig. 1b dar. Hierbei ist der Seitenhalter 3 vor der Tunnelwandung 2 dunkel und vor dem Tunnelportal hell. Bei einer Farbdarstellung weist der Seitenhalter 3 vor dem jeweiligen Hintergrund eine unterschiedliche Farbe auf.

Bei einem Bild mit einem Mittelwert aus Fig. 1a und Fig. 1b wäre der Seitenhalter als graues Objekt sowohl vor der dunklen Tunnelwandung als auch vor dem hellen Tunnelportal zu erkennen.

### Bezugszeichenliste

- 1: Tunnelportal
- 2: Tunnelwandung
- 3: Seitenhalter

## Patentansprüche

1. Vorrichtung zur Umgebungslicht-unabhängigen Beobachtung von Objekten mittels mindestens einer Kamera von einem Fahrzeug aus bei hoher Geschwindigkeit, wobei mindestens eine Multispektralkamera, die mindestens einen ersten Kanal aufweist, der im sichtbaren
Wellenlängenbereich empfindlich ist, und mindestens einen weiteren Kanal aufweist, der im unsichtbaren Wellenlängenbereich empfindlich ist, Bilder der Objekte aufzeichnet und eine Beleuchtung die zu untersuchenden Objekte in den entsprechenden unsichtbaren Wellenlängenbereichen anstrahlt und
- der Wellenlängenbereich des mindestens einen ersten Kanals außerhalb des Wellenlängenbereichs der Beleuchtung liegt und
- der Wellenlängenbereich des mindestens einen weiteren Kanals eine Untermenge des Wellenlängenbereichs der Beleuchtung ist,
- **dadurch gekennzeichnet, dass** die Lichtstärke der Beleuchtung so gewählt ist, dass sie das am Objekt reflektierte Sonnenlicht nicht überstrahlt und
- dass die Beleuchtung aus mindestens zwei Lichtquellen mit unterschiedlichen IR-Bereichen besteht, die sich nicht am selben Ort befinden, und die Multispektralkamera einen sichtbaren und zwei IR-Kanäle aufweist, deren jeweiliger Wellenlängenbereich dem zugehörigen Wellenlängenbereich der Beleuchtung entspricht.

2. Vorrichtung zur Umgebungslicht-unabhängigen Beobachtung von Objekten nach Anspruch 1, **dadurch gekennzeichnet, dass** die Beobachtung von Objekten eine Inspektion und/oder Hinderniserkennung und/oder Überwachung beinhaltet.

3. Vorrichtung zur Umgebungslicht-unabhängigen Beobachtung von Objekten nach mindestens einem der Ansprüche 1 und 2, **dadurch gekennzeichnet, dass** aus mindestens zwei aufgenommen Kanälen der Multispektralkamera ein mindestens zweikanaliges Bild, d.h. eine Überlagerung der jeweiligen gleichzeitig aufgenommener Bilder aus der gleichen Perspektive in unterschiedlichen Wellenlängenbereichen, erzeugt wird.

4. Vorrichtung zur Umgebungslicht-unabhängigen Beobachtung von Objekten nach mindestens einem der Ansprüche 1 bis 3, **dadurch gekennzeichnet, dass** die erfindungsgemäße Vorrichtung Hindernisse im Fahrweg des Fahrzeuges erkennt.

5. Vorrichtung zur Umgebungslicht-unabhängigen Beobachtung von Objekten nach mindestens einem der Ansprüche 1 bis 4, **dadurch gekennzeichnet, dass** die Beleuchtung kontinuierlich erfolgt.

6. Vorrichtung zur Umgebungslicht-unabhängigen Beobachtung von Objekten nach mindestens einem der Ansprüche 1 bis 4, **dadurch gekennzeichnet, dass** die Beleuchtung kontinuierlich und konstant erfolgt.

7. Vorrichtung zur Umgebungslicht-unabhängigen Beobachtung von Objekten nach mindestens einem der Ansprüche 1 bis 6, **dadurch gekennzeichnet, dass** die beiden ersten aufgenommen Kanäle der Multispektralkamera im Wellenlängenbereich Rot und Grün empfindlich sind.

8. Vorrichtung zur Umgebungslicht-unabhängigen Beobachtung von Objekten nach Anspruch 7, **dadurch gekennzeichnet, dass** die IR-Bereiche der Beleuchtung unterschiedliche Öffnungswinkel aufweisen.

## Claims

1. A device for the monitoring of objects independent of ambient light by means of at least one camera from a vehicle at high speed, wherein at least one multispectral camera having at least one first channel which is sensitive in the visible wavelength range and having at least one additional channel which is sensitive in the invisible wavelength range, records images of the object and an illumination which in the corresponding invisible wavelength ranges illuminates the objects to be examined and
- the wavelength range of the at least one first channel lies outside the wavelength range of the illumination and
- the wavelength range of the at least one additional channel is a subset of the wavelength range of the illumination,
**characterized in that** the light output of the illumination is so selected that it does not over-illuminate the sunlight reflected on the object and
**in that** the illumination consists of at least two light sources with different IR-ranges which are located in the same location and the multispectral camera has a visible and two IR-channels, whose respective wavelength range corresponds to the associated wavelength range of the illumination.

2. The device for the monitoring of objects independent of ambient light according to Claim 1, **characterized in that** the monitoring of objects includes an inspection and/or obstacle detection and/or monitoring.

3. The device for the monitoring of objects independent of ambient light according to at least one of the Claims 1 and 2, **characterized in that** from at least two captured channels of the multispectral camera an at least two-channel image, i.e. an overlay of the respective images simultaneously taken from the same perspective in different wavelength ranges is generated.

4. The device for the monitoring of objects independent of ambient light according to at least one of the Claims 1 to 3, **characterized in that** the device according to the invention detects obstacles in the driving path of the vehicle.

5. The device for the monitoring of objects independent of ambient light according to at least one of the Claims 1 to 4, **characterized in that** the illumination takes place continuously.

6. The device for the monitoring of objects independent of ambient light according to at least one of the Claims 1 to 4, **characterized in that** the illumination takes place continuously and constantly.

7. The device for the monitoring of objects independent of ambient light according to at least one of the Claims 1 to 6, **characterized in that** the two channels of the multispectral camera first captured are sensitive in the wavelength range red and green.

8. The device for the monitoring of objects independent of ambient light according to Claim 7, **characterized in that** the IR-ranges of the illumination have different acceptance angles.

## Revendications

1. Dispositif d'observation indépendante de la lumière ambiante d'objets au moyen d'au moins une caméra depuis un véhicule à grande vitesse, au moins une caméra multispectrale, qui présente un premier canal qui est sensible dans la plage de longueur d'onde visible et au moins un autre canal qui est sensible dans la plage de longueur d'onde invisible, enregistrant des images des objets et un éclairage irradiant les objets à étudier dans les plages correspondantes de longueur d'onde invisibles et
- la plage de longueur d'onde de l'au moins un premier canal se situant en dehors de la plage de longueur d'onde de l'éclairage et
- la plage de longueur d'onde de l'au moins un autre canal étant une sous-quantité de la plage de longueur d'onde de l'éclairage,
**caractérisé en ce que** l'intensité lumineuse de l'éclairage est choisie de manière à ce qu'elle ne sur-irradie pas la lumière reflétée au niveau de l'objet et
que l'éclairage consiste en au moins deux sources lumineuses à plages IR différentes qui se trouvent au même endroit et que la caméra multispectrale présente un canal visible et deux canaux IR dont la plage respective de longueur d'onde équivaut à la plage de longueur d'onde afférente de l'éclairage.

2. Dispositif d'observation indépendante de la lumière ambiante d'objets selon la revendication 1, **caractérisé en ce que** l'observation d'objets comprend une inspection et/ou détection d'obstacles et/ou une surveillance.

3. Dispositif d'observation indépendante de la lumière ambiante d'objets selon au moins une des revendications 1 et 2, **caractérisé en ce que**, à partir d'au moins deux canaux enregistrés de la caméra multispectrale, une image à au moins deux canaux, c'est-à-dire une superposition des images respectives enregistrées simultanément depuis la même perspective dans différentes plage de longueur d'onde, est générée.

4. Dispositif d'observation indépendante de la lumière ambiante d'objets selon au moins une des revendications 1 à 3, **caractérisé en ce que** le dispositif selon l'invention détecte les obstacles dans la trajectoire du véhicule.

5. Dispositif d'observation indépendante de la lumière ambiante d'objets selon au moins une des revendications 1 à 4, **caractérisé en ce que** l'éclairage fonctionne en continu.

6. Dispositif d'observation indépendante de la lumière ambiante d'objets selon au moins une des revendications 1 à 4, **caractérisé en ce que** l'éclairage fonctionne en continu et constamment.

7. Dispositif d'observation indépendante de la lumière ambiante d'objets selon au moins une des revendications 1 à 6, **caractérisé en ce que** les deux premiers canaux enregistrés de la caméra multispectrale sont sensibles dans la plage de longueur d'onde rouge et verte.

8. Dispositif d'observation indépendante de la lumière ambiante d'objets selon la revendication 7, **caractérisé en ce que** les plages IR de l'éclairage présentent différents angles d'ouverture.
